# EUROPEAN PATENT APPLICATION

(11) **EP 4 454 935 A1**
(43) Date of publication of application: **30.10.2024**
(21) Application number: 22909800.9
(22) Date of filing: 12.12.2022
(51) Int. Cl.: B60L 53/80, B60S 5/06

(54) **BATTERY PACK REPLACEMENT SYSTEM FOR VEHICLES**

(30) Priority: 22.12.2021 CN 202111583938
(71) Applicant: Ger, Chih-chan, New Taipei City (TW)
(72) Inventor: Ger, Chih-chan, New Taipei City (TW)
(74) Representative: Cabinet Chaillot
(86) International application number: PCT/CN2022/138396
(87) International publication number: WO 2023/116486

(57) **Abstract**

A battery pack replacement system for vehicles is described, including a plurality of first passages, at least one second passage, and at least one processing equipment. The vehicles move along their respective first passages, and the second passage is arranged to intersect with these first passages in a projection direction. The intersection positions of the second passage with these first passages each have a processing area. The processing equipment moves along the corresponding second passage between these processing areas, performing a battery pack replacement operation on vehicles located in each processing area. The battery pack replacement operation involves the processing equipment unloading a used battery pack from the vehicle and loading a charged battery pack onto the vehicle.

## Description

### BACKGROUND

### 1. Technical Field

The present invention relates to a processing system, in particular to a battery pack replacement system applied for use in vehicles.

### 2. Description of Related Art

The operation of electric vehicles is driven by the electrical energy stored in the battery pack. Therefore, maintaining the electrical energy level of the battery pack becomes one of the primary tasks. In general, there are at least three methods available to maintain the electrical energy level of the battery pack in the electric vehicle (EV): the first involves alternating current (AC) charging of the battery pack installed in the EV (commonly known as slow charging), the second involves direct current (DC) charging of the battery pack installed in the EV (commonly known as fast charging), and the third involves the direct replacement of the battery pack mounted on the EV

The primary drawback of replenishing the electrical energy of the battery pack through charging is the time consumption. For instance, to charge 80% of the electrical energy using slow charging may take approximately 3 to 5 hours, and even with fast charging, it still requires at least 20 to 30 minutes. Therefore, the use of charging methods makes it challenging to replenish the electrical energy of the battery pack instantly and rapidly, resulting in inconvenience in practical applications.

Compared to replenishing electrical energy through charging, directly replacing the battery pack allows the EV to immediately obtain the required electrical energy. However, due to the proportional relationship between the weight and energy density of the battery pack, larger battery capacities result in heavier weights, posing challenges for manual execution of the battery pack replacement operation. In current technology, the battery pack of a typical EV constitutes approximately one-fourth of the total vehicle weight. Taking a 2000 kg EV as an example, the weight of its battery pack is around 500 kg. Therefore, automated replacement equipment is necessary for replacing the battery pack. Additionally, the batteries used for replacement cannot be shared among different EV models, further complicating the implementation of battery pack replacement.

Although replacing the battery pack allows the EV to replenish electrical energy more quickly, the cost of establishing automated replacement equipment is at least tens of times higher than that of fast charging devices, thereby impacting the scale of implementation. Insufficient replacement equipment cannot meet the demand of most vehicles during peak hours, leading to owners having to queue for replacement. On the other hand, if an excessive number of replacement equipment are installed, it will result in a substantial capital investment, especially considering the low utilization rate during off-peak periods for battery pack replacements. This scenario is particularly relevant in certain locations such as rest areas along long-distance or highway routes, where there is a significant demand for battery pack replacements during holidays or weekends (i.e., peak demand), while demand is lower on regular weekdays (i.e., off-peak demand).

Furthermore, the battery pack replacement operation falls within the realm of the service industry, and its service combination cannot be pre-planned. It is necessary to choose the corresponding battery pack and solution combination based on the requirement of the EV after it arrives before proceeding with the replacement operation. Any delays in operation due to this process will severely impact the overall operational efficiency, posing disadvantages for both service providers and consumers. Moreover, current battery pack replacement operations can only be performed on a single brand or a single specification of EV This inconvenience restricts consumer purchasing and usage intentions regarding battery replacements.

Therefore, while replenishing the electrical energy of the EV through battery pack replacement is a preferable option, but in order to achieving a balance between the investment cost, utilization rate, operational efficiency, and overall efficiency of the battery pack replacement system is challenging, especially considering the peak and off-peak characteristics mentioned above. In response to these challenges, the inventor has provided a battery pack replacement system for vehicles to address the aforementioned issues.

### SUMMARY OF THE INVENTION

In view of the foregoing, the objective of the present invention is to provide a battery pack replacement system for vehicles that can reduce the unit cost of replacing the battery pack for each vehicle, enhance system interoperability, and support flexible system expansion.

To achieve the above objectives, the present invention provides a battery pack replacement system for vehicles, including a plurality of first passages, at least one second passage, and at least one processing equipment. The first passages are each designed to facilitate the movement of at least one vehicle. The second passage is arranged to intersect with these first passages in a projection direction, and the overlapping positions of the second passage with these first passages each have a processing area. The processing equipment moves along the corresponding second passage between these processing areas, and performs a battery pack replacement operation on at least one of the vehicles in one of these processing areas. The battery pack replacement operation involves the processing equipment unloading a used battery pack from the vehicle and loading a charged battery pack onto the vehicle.

In one embodiment, the battery pack replacement system also includes a battery pack storage area, situated adjacent to the second passage for storing a plurality of battery packs. The battery packs include a used battery pack, a charged battery pack, and combinations thereof. Additionally, the processing equipment moves between the battery pack storage area and the various processing areas to transport both the used battery packs and the charged battery packs.

In one embodiment, the battery pack replacement system also includes a battery pack storage area and a battery pack moving device. The battery pack storage area is situated adjacent to the second passage and stores a plurality of battery packs, including the used battery pack, the charged battery pack, and combinations thereof. The battery pack moving device moves along the second passage between the battery pack storage area and the processing equipment. The battery pack moving device is designed to access the battery packs at either the battery pack storage area or the corresponding position relative to the processing equipment.

In one embodiment, the battery pack replacement system also includes a third passage, a battery pack storage area, and a battery pack moving device. The third passage is located on one side of the second passage. The battery pack storage area is adjacent to the third passage and stores a plurality of battery packs, including the used battery pack, the charged battery pack, and combinations thereof. The battery pack moving device moves along the third passage between the battery pack storage area and the corresponding position relative to the processing equipment. The battery pack moving device is designed to access the battery packs at either the battery pack storage area or the corresponding position relative to the processing equipment.

In one embodiment, the battery pack moving device accesses the battery packs while both itself and the processing equipment are in motion.

In one embodiment, the battery pack replacement system also includes a battery pack moving device, which moves along the second passage between the battery pack storage area and each processing area to transport the used battery pack, the charged battery pack, and their combinations.

In one embodiment, the second passage has two intersection positions with each of the first passages. In another embodiment, the second passage is circularly arranged with the battery pack storage area as the center.

In one embodiment, the third passage is located between two adjacent second passages.

In one embodiment, the combination of the battery pack replacement operation performed in each processing area is varied. It includes different vehicle models, varying battery pack capacities, diverse quantities of battery packs, and a variety of combinations thereof.

In one embodiment, the number of processing equipment moving along the second passage is more than one.

In one embodiment, when the number of processing equipment is more than one, then at least two of the processing equipment have different applicable vehicle specifications or applicable battery pack specifications.

In one embodiment, the battery pack replacement operation also involves unloading and/or loading a plurality of battery packs for the same vehicle.

In addition, to achieve the above objectives, the present invention also provides a battery pack replacement system for vehicles, including a first passage, a second passage, and at least one processing equipment. The first passage is capable of accommodating a plurality of vehicles simultaneously or allowing them to move within it. The second passage has a plurality of overlapping positions with the first passage in a projection direction, and each overlapping position has a processing area. The processing equipment moves along the second passage between the processing areas and performs a battery pack replacement operation on different vehicles in different processing areas. The battery pack replacement operation includes the processing equipment unloading a used battery pack from the vehicle and loading a charged battery pack onto the vehicle.

In one embodiment, the battery pack replacement system also includes a third passage, a battery pack storage area, and a battery pack moving device. The third passage is located on one side of the second passage. The battery pack storage area is adjacent to the third passage and stores a plurality of battery packs. The battery pack moving device moves along the third passage between the battery pack storage area and the corresponding position relative to the processing equipment. The battery pack moving device accesses the battery packs at the battery pack storage area and/or the corresponding position relative to the processing equipment.

As mentioned above, the battery pack replacement system for vehicles according to the present invention has at least the following three features:
Feature 1: The second passage and the first passage are three-dimensional crossed, presenting an overlapping arrangement in the projection direction. The battery pack replacement operation is executed in this three-dimensional structure. The processing equipment utilizes the movement and positioning idle time of vehicles on the first passages to perform the battery pack replacement operation on other vehicles that have already been positioned on different first passages. This enhances the operational efficiency of the high-value processing equipment, thereby reducing the unit cost of replacing the vehicle's battery pack.
Feature 2: When the number of processing equipment is more than one, the applicable vehicle specifications or applicable battery pack specifications for each processing equipment can be different. The processing equipment and the vehicles prepared for the battery pack replacement operation move in different passages and different planes, allowing flexible allocation of positions for performing the battery pack replacement operation. This enables vehicles with different specifications to execute the battery pack replacement operation within the same battery pack replacement system, enhancing system interoperability.
Feature 3: A single processing equipment can perform the battery pack replacement operation on different vehicles on different first passages. Additionally, when the battery pack replacement system needs expansion, it is possible to add first passages individually or add processing equipment individually, allowing flexible system expansion.

Through the above features, the battery pack replacement system for vehicles according to the present invention can achieve a balance between investment cost, utilization rate, and operational efficiency. Furthermore, the system can be flexibly expanded.

The detailed technology and preferred embodiments implemented for the subject invention are described in the following paragraphs accompanying the appended drawings for people skilled in this field to well appreciate the features of the claimed invention.

### BRIEF DESCRIPTION OF THE DRAWINGS

The parts in the drawings are not necessarily drawn to scale, the emphasis instead being placed upon clearly illustrating the principles of at least one embodiment. In the drawings, like reference numerals designate corresponding parts throughout the various diagrams, and all the diagrams are schematic.
FIG. 1 illustrates a schematic diagram of the battery pack replacement system for vehicles in the first embodiment of the present invention.
FIG. 2 illustrates a schematic diagram of the battery pack replacement system for vehicles in the second embodiment of the present invention.
FIG. 3 illustrates a schematic diagram of the battery pack replacement system for vehicles in the third embodiment of the present invention.
FIG. 4 illustrates a schematic diagram of the battery pack replacement system for vehicles in the fourth embodiment of the present invention.
FIG. 5 illustrates a schematic diagram of the battery pack replacement system for vehicles in the fifth embodiment of the present invention.
FIG. 6 illustrates a schematic diagram of the battery pack replacement system for vehicles in the sixth embodiment of the present invention.
FIG. 7 illustrates a schematic diagram of the battery pack replacement system for vehicles in the seventh embodiment of the present invention.

### DETAILED DESCRIPTION

The following will refer to relevant diagrams to explain a battery pack replacement system for vehicles in a preferred embodiment of the present invention.

In this embodiment, the defined terms are as follows, where "access" includes place into, take out, and their combinations. The term "finished product" represents an item that is completed in manufacturing and can operate individually, for example, "the EV" as mentioned in this embodiment is a finished product, having at least necessary components such as a battery pack.

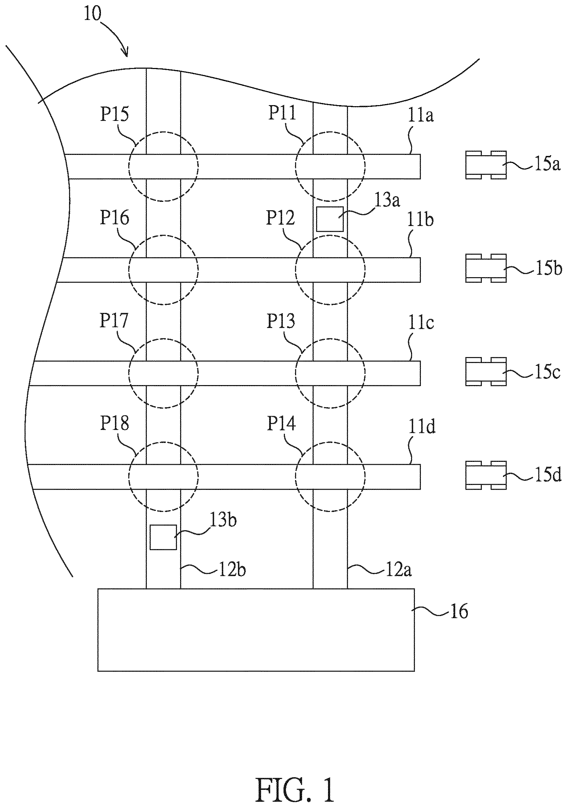

Please refer to FIG. 1, a battery pack replacement system 10 for vehicles in the first embodiment of the present invention includes four first passages 11a-11d, two second passages 12a-12b, two processing equipments 13a-13b, and a battery pack storage area 16.

The four first passages 11a-11d are spaced apart from each other and located on a first plane, each providing a first object to move within. The first object may be a finished product, such as the EVs 15a-15d. Taking the EV 15a as an example, it may be transported along the first passage 11a using a moving device. The moving device can be an Automated Guided Vehicle (AGV) or an automatic transfer track, for instance. In other embodiments, the vehicle itself can serve as the moving device and move within the first passage through the control of the driver.

The two second passages 12a-12b are located on a second plane, different from the first plane. In this embodiment, the second plane is positioned below the first plane. The second passages 12a-12b intersect with the first passages 11a-11d in a projection direction, meaning they partially overlap. Each intersection position (or called overlapping position) of the second passages 12a-12b with the first passages 11a-11d has a processing area. In this embodiment, there are a total of eight processing areas P11-P18.

It is worth noting that, in other embodiments, the first passages and the second passages may partially be located on the same plane. The different planes may be formed only in the processing areas. For example, the second passages may be below the first passages only in the processing areas, while in other locations, the second passages and the first passages are in the same plane.

The two processing equipments 13a-13b move along their respective second passages 12a-12b between the corresponding processing areas P11-P18. The processing areas P11-P18 provide positions for the processing equipments 13a-13b to perform the battery pack replacement operation on the EVs 15a-15d. For example, the processing equipment 13a moves along the second passage 12a to the processing area P11, where it performs the battery pack replacement operation on the EV 15a. The battery pack replacement operation may include the processing equipment 13a unloading a used battery pack from the EV 15a and loading a charged battery pack onto the EV 15a.

In addition, the second passages 12a-12b extend to the battery pack storage area 16, and the processing equipments 13a-13b can also move between the battery pack storage area 16 and the processing areas P11-P18. The battery pack storage area 16 stores a plurality of battery packs, including but not limited to swappable battery packs. Swappable battery packs are designed to be used in conjunction with EVs equipped with main battery packs, primarily providing additional capacity for the EVs. Additionally, each swappable battery pack is equipped with a DC/DC converter that is adaptively designed to correspond to the electrical parameters such as capacity or power of each swappable battery pack. This allows the swappable battery packs to charge, discharge, or collaborate with different main battery packs in various vehicles, achieving broad compatibility.

Moreover, to further increase the versatility of swappable battery packs, a single large-sized battery pack may be divided into multiple small-sized battery packs. Each small-sized battery pack may have different sizes and/or capacities, and the combination of battery packs with different sizes and/or capacities can cover more possibilities, making them suitable for various vehicle designs.

In the example of the battery pack replacement system for vehicles, as shown in FIG. 1, the battery pack replacement system 10 may be built at a rest area along a road. The road may include, but is not limited to, long-distance roads or highways. An electric vehicle (EV) can enter the battery pack replacement system 10 during its journey to undergo the battery pack replacement operation. The EV may have a configuration with only a single battery pack or a configuration with both a main battery pack and a swappable battery pack. Before entering the battery pack replacement system 10, the EV is guided to the entrance of the first passage 11b from a waiting position, and within the battery pack replacement system 10, the EV may be transported by the aforementioned mentioned moving devices.

Subsequently, the moving device moves along the first passage 11b to the processing area P12 based on a first guidance information, while the processing equipment 13a moves along the second passage 12a to the processing area P12. The processing equipment 13a can move to the processing area P12 from any position along the second passage 12a. For example, after completing the battery pack replacement operation in the processing area P14, the processing equipment 13a can then move to the processing area P12.

In the processing area P12, the level of the second plane is lower than the level of the first plane, so the processing equipment 13a is positioned below the EV The processing equipment 13a first unloads the used battery pack from the EV and then loads the charged battery pack into the EV to complete the battery pack replacement operation. Subsequently, the moving device moves the EV out of the first passage 11b based on a second guidance information.

Since the battery packs used in the EV, whether they are main battery packs or swappable battery packs, are objects weighing several hundred kilograms and operating at voltage levels of several hundred volts, the processing equipment that requires stability, precision, and safety requirements tends to have a relatively high unit cost. In the battery pack replacement system of the present invention, by allowing the processing equipment to perform the battery pack replacement operation on the EV in at least one of the corresponding processing areas corresponding to different first passages, and by arranging the first passages and the second passage on different planes, a single processing equipment can be scheduled to perform the battery pack replacement operation on different EVs in different first passages. Consequently, the high-cost processing equipment does not need to be fixedly configured for each first passage (i.e., the number of processing equipment can be less than the number of first passages), reducing the unit cost of the battery pack replacement system. When the number of EVs requiring battery pack replacement increases, the processing equipment can be scheduled to move between the corresponding processing areas to increase the utilization rate of the high-cost processing equipment, thereby reducing the unit cost of EV battery pack replacement operations and optimizing the efficiency of the battery pack replacement system. Through such optimization, a balance is achieved between overall investment costs, utilization rates, and operational efficiency. The scheduling method includes, but is not limited to, the processing equipment using the idle time for moving and positioning provided by the EVs on the first passages to immediately perform the battery pack replacement operation on other EVs that have already been positioned on the first passage (or the processing area).

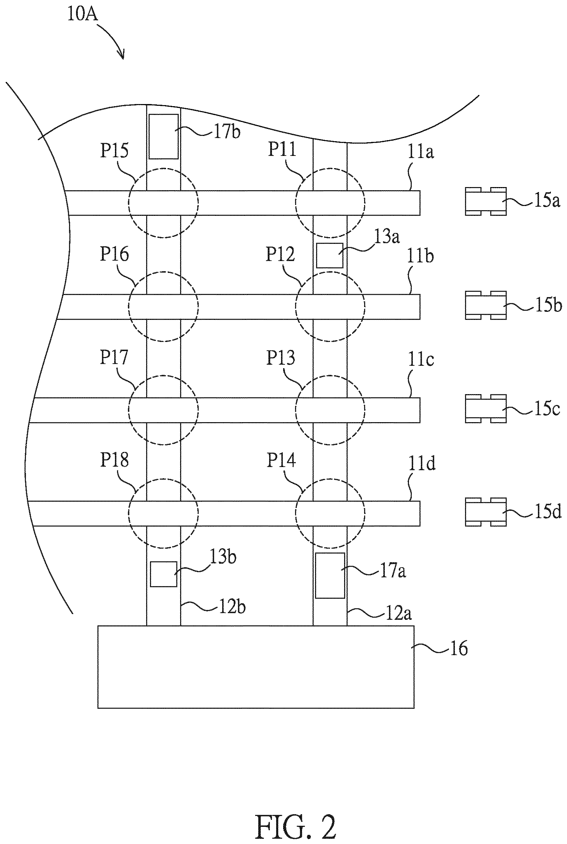

In addition, FIG. 2 illustrates an application of the battery pack replacement system 10A, representing the second embodiment of the present invention. In contrast to the battery pack replacement system 10 in the first embodiment, the battery pack replacement system 10A includes two battery pack moving devices 17a-17b. In the first embodiment, the processing equipment carries both the used battery pack and the charged battery pack, which includes battery packs and swappable battery packs. However, in the second embodiment, the used battery pack and the charged battery pack are carried by the battery pack moving devices 17a-17b. These battery pack moving devices move along the corresponding second passages 12a-12b between the battery pack storage area 16 and the various processing areas P11-P18. The battery pack moving devices 17a-17b access battery packs in the battery pack storage area, and then the processing equipments 13a-13b collaborates with the battery pack moving devices 17a-17b to perform battery pack access actions. Consequently, the processing equipments 13a-13b does not need to travel between the processing areas and the battery pack storage area, allowing for a more rapid execution of the battery pack replacement operation.

It is worth mentioning that, in FIG. 2, both the processing equipments 13a-13b and the battery pack moving devices 17a-17b move within the second passages 12a-12b. The configuration of the second passages allows the processing equipments 13a-13b and the battery pack moving devices 17a-17b to move freely within them without obstructing each other.

Simultaneously, to further increase the utilization rate, the processing equipment and the battery pack moving device can access the required battery packs during their movement. For example, during the movement of the processing equipment towards the next processing area, the unloaded used battery pack can be handed over to the battery pack moving device, which is also in motion. The battery pack moving device can then acquire the charged battery pack intended for use in the next processing area, effectively utilizing time.

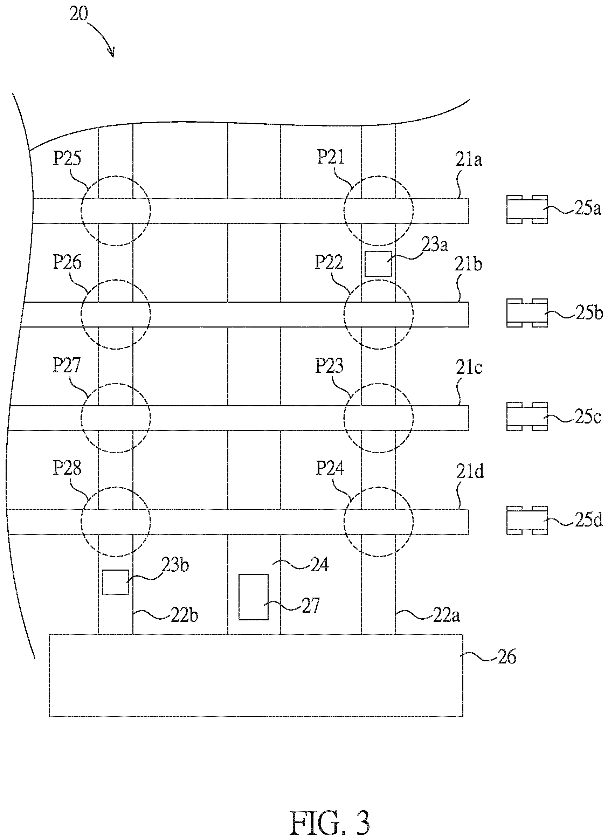

Next, please refer to FIG. 3. The battery pack replacement system 20, which is the third embodiment of the present invention, includes four first passages 21a-21d, two second passages 22a-22b, two processing equipments 23a-23b, a third passage 24, a battery pack storage area 26, and a battery pack moving device 27.

The four first passages 21a-21d are spaced apart from each other in a first plane and are used to transport the EVs 25a-25d, where each vehicle has at least essential components such as a battery pack (including a main battery pack and/or a swappable battery pack). Taking the EV 25a as an example, it can be transported along the first passage 21a by a moving device. The moving device can be, for example, an Automated Guided Vehicle (AGV) or an automatic transport track. Additionally, the vehicle itself can serve as a mobile device and move within the first passages through driver control.

The two second passages 22a-22b are situated in a second plane, different from the first plane. In the third embodiment, the second plane is located below the first plane. In other embodiments, the first passages and the second passages may partially be in the same plane, forming different planes only in the processing area. For instance, the second passage may be below the first passages only in the processing area, while in other locations, the second passage and the first passages are in the same plane.

The two second passages 22a-22b intersect with the first passages 21a-21d in a projection direction. The intersection positions (or called overlapping positions) of the second passages 22a-22b with the first passages 21a-21d each have a processing area. In other words, in the third embodiment, there are a total of eight processing areas P21-P28.

The two processing equipments 23a-23b move along the corresponding second passages 22a-22b between the corresponding processing areas P21-P28. The processing areas P21-P28 provide locations for the processing equipments 23a-23b to perform the battery pack replacement operation on the EVs 25a-25d. For example, the processing equipment 23a moves along the second passage 22a to the processing area P21 and performs the battery pack replacement operation on the EV 25a in the processing area P21.

The third passage 24 is located on one side of the two second passages 22a-22b. The term "one side" refers to any angle in the spatial directions of up, down, left, and right, and one end of the third passage 24 extends to the battery pack storage area 26. The battery pack moving device 27 moves along the third passage 24 between the battery pack storage area 26 and the corresponding positions near the processing equipments 23a-23b. It is worth mentioning that the battery pack moving device 27 can obtain the charged battery pack from the battery pack storage area 26 and may acquire the used battery pack unloaded by the processing equipment 23a or 23b near the processing area.

The moving device moves the EV along the first passage 21b to the processing area P22, while the processing equipment 23a moves along the second passage 22a to the processing area P22. The battery pack moving device 27 first obtains a charged swappable battery pack from the battery pack storage area 26 and moves to a position near (or corresponding to) the processing area P22 to access the battery pack with the processing equipment 23a. The processing equipment 23a may unload the used swappable battery pack from the EV first, then load the charged swappable battery pack carried by the battery pack moving device 27 onto the EV to complete the battery pack replacement operation. After the processing is complete, the EV is moved out of the first passage 21b by the moving device.

The battery pack moving device 27 may also include a battery replenishment device and a battery recovery device (not shown in the figure). The battery replenishment device can store charged swappable battery packs, and the battery recovery device can store used swappable battery packs unloaded from the EV This arrangement provides flexibility in handling charged and used swappable battery packs, contributing to improved operational efficiency.

In other embodiments, the number of battery pack moving devices 27 moving in the third passage 24 is not limited, and the quantity of battery replenishment devices and battery recovery devices is also not restricted. This setup allows for an increased quantity or distance of battery pack transport under the same time conditions, thereby maintaining the processing equipment at maximum efficiency. Additionally, to enhance the efficiency of battery pack transport, multiple battery pack moving devices 27 can move within the same third passage 24. Furthermore, to further improve the utilization rate, the processing equipment and the battery pack moving device can access the required battery packs during their movement. For instance, as the processing equipment moves to the next processing area, it can transfer the unloaded used battery pack to the moving battery pack moving device, which can, in turn, acquire the charged battery pack needed for the next processing area, effectively utilizing time.

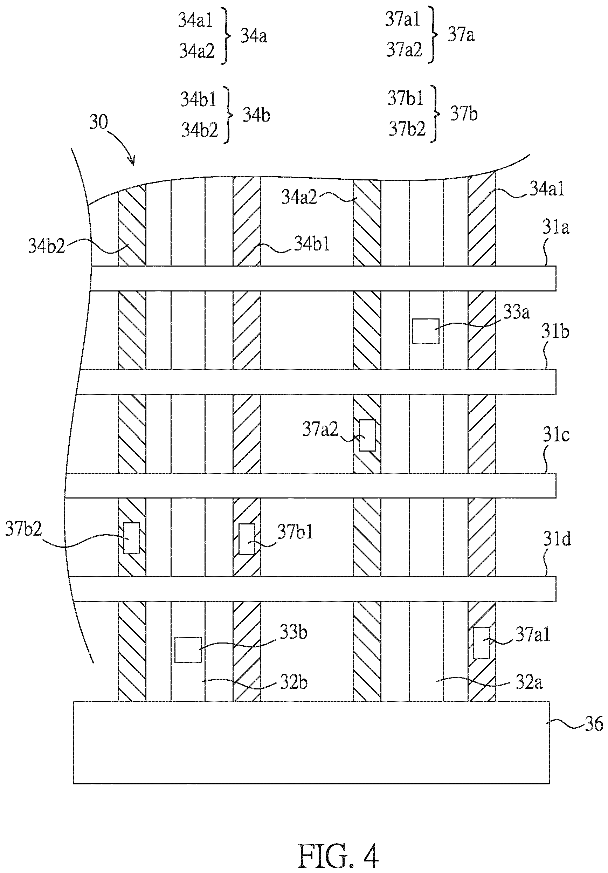

Next, please refer to FIG. 4, which illustrates the fourth embodiment of the battery pack replacement system 30 for vehicles in the present invention. It includes four first passages 31a-31d, two second passages 32a-32b, two processing equipments 33a-33b, two third passages 34a-34b, a battery pack storage area 36, and two sets of battery pack moving devices 37a-37b. The configurations of the first passages 31a-31d, second passages 32a-32b, processing equipments 33a-33b, and battery pack storage area 36 are the same as those in the third embodiment (the first passages 21a-21d, the second passages 22a-22b, the processing equipments 23a-23b, and the battery pack storage area 26), and will not be reiterated here.

The fourth embodiment differs from the third embodiment in that the third passages 34a and 34b are adjacent to the second passages 32a and 32b. The third passages 34a and 34b can be located on the same or different planes as the second passages 32a and 32b, for example, on the left and right sides of the same plane, on the upper and lower sides of different planes, or other adjacent orientations. In the fourth embodiment, the third passage 34a has two third sub-passages 34a1 and 34a2, each positioned on both sides of the second passage 32a, and the third passage 34b has two third sub-passages 34b1 and 34b2, each positioned on both sides of the second passage 32b. Additionally, the battery pack moving device 37a has two battery pack sub-moving devices 37a1 and 37a2, which move along the third sub-passages 34a1 and 34a2, respectively. The battery pack moving device 37b has two battery pack sub-moving devices 37b1 and 37b2, which move along the third sub-passages 34b1 and 34b2, respectively.

The battery pack sub-moving devices 37a1 and 37b1 may serve as the battery replenishment device described in the third embodiment, while the battery pack sub-moving devices 37a2 and 37b2 may serve as the battery recovery device described in the third embodiment. Both the battery replenishment devices and battery recovery devices move between the battery pack storage area 36 and the positions correspond to the processing area. The battery replenishment device provides the charged battery pack to the processing equipment, while the battery recovery device allows the processing equipment to obtain the used battery pack unloaded from the EV In other embodiments, the battery pack sub-moving devices 37a1, 37a2, 37b1, and 37b2 can simultaneously function as both the battery replenishment devices and the battery recovery devices.

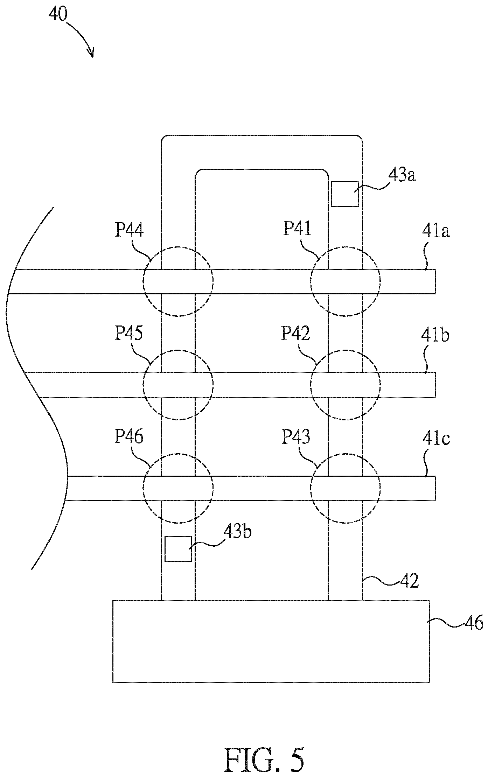

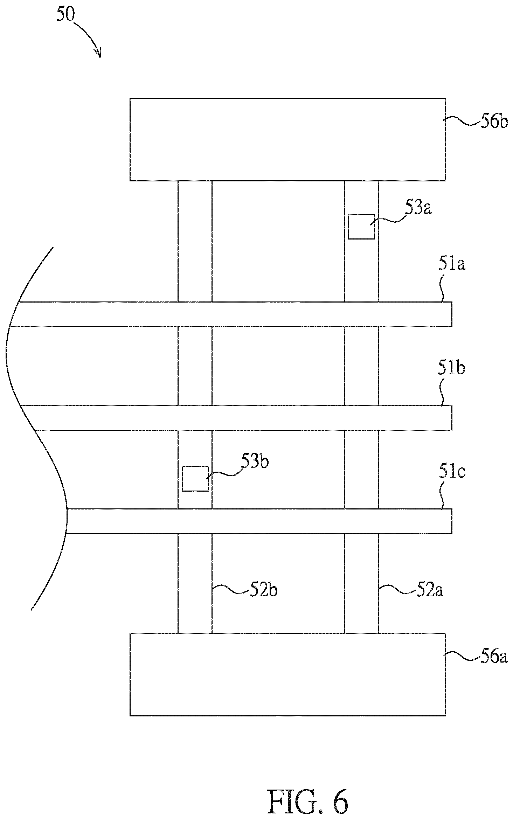

The passages and the battery pack storage area in the above embodiments of the battery pack replacement system can have different configurations, as explained below with reference to Figures 5 and 6. It is important to note that these variations can be applied separately or simultaneously to the first through fourth embodiments mentioned above, or in other similar embodiments.

Please refer to FIG. 5, which illustrates the fifth embodiment of the battery pack replacement system 40 for vehicles in the present invention. It includes three first passages 41a-41c, one second passage 42, two processing equipments 43a-43b, and one battery pack storage area 46.

The three first passages 41a-41c are spaced apart from each other and located on a first plane, used to convey vehicles. The first passages 41a-41c and vehicles are similar to the embodiments mentioned above, so they will not be described again.

The second passage 42 is located on a second plane, different from the first plane. In this fifth embodiment, the second plane is below the first plane. The second passage 42 intersects with the first passages 41a-41c in a projection direction. The intersection positions of the second passage 42 with the first passages 41a-41c each have a processing area. In other words, in this embodiment, there are a total of six processing areas P41-P46. In this embodiment, the second passage 42 is arranged in a U-shape or circular manner in the system, and it can have two or more intersection positions with the first passages 41a-41c.

The two processing equipments 43a-43b move along the second passage 42 between the various processing areas P41-P46. In other embodiments, the number of processing equipment can be adjusted according to requirements. In other words, in the same passage, the number of processing equipment can be one or more. Here, the processing equipments 43a-43b and the battery pack storage area 46 have a similar connection relationship and function to the processing equipments 13a-13b and the battery pack storage area 16 in the first embodiment, and therefore will not be described again.

Please refer to FIG. 6, which illustrates the sixth embodiment of a battery pack replacement system 50 for vehicles in the present invention. It includes three first passages 51a-51c, two second passages 52a-52b, two processing equipments 53a-53b, and two battery pack storage areas 56a-56b. Here, the first passages 51a-51c, the second passages 52a-52b, and the processing equipments 53a-53b have a similar connection relationship and function to the first passages 11a-11d, the second passages 12a-12b, and the processing equipments 13a-13b in the first embodiment. However, unlike the previous embodiments, the two ends of the second passages 52a-52b extend to the respective battery pack storage areas 56a-56b.

In the battery pack storage areas 56a-56b, it is possible to simultaneously store the charged battery pack, the used battery pack, and their combinations. Alternatively, the battery pack storage area 56a can store the charged battery pack, while the battery pack storage area 56b can store the used battery pack, providing different storage configurations.

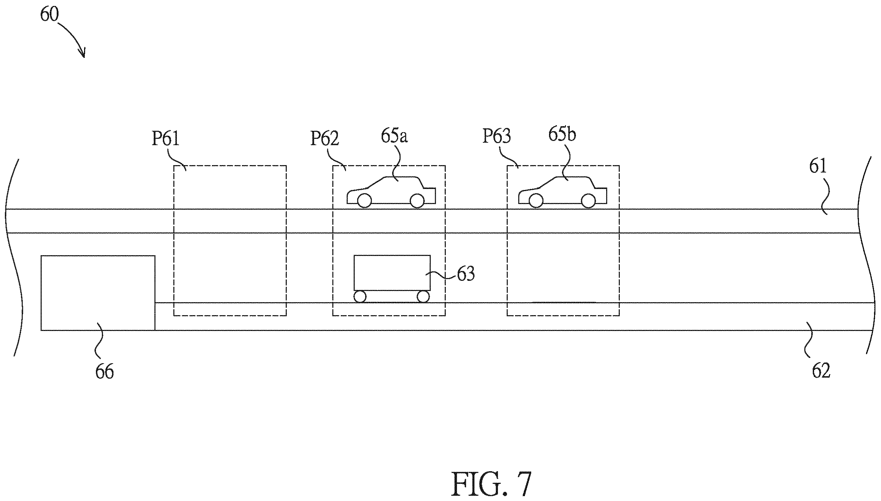

Referring to FIG. 7, in the seventh embodiment of the vehicle battery pack replacement system 60, there is a first passage 61, a second passage 62, a processing equipment 63, and a battery pack storage area 66. The first passage 61 can accommodate the simultaneous movement of a plurality of EVs 65a-65b, and the method of movement of the EVs 65a-65b is as described above, and will not be repeated here.

The second passage 62 and the first passage 61 have a plurality of overlapping positions in a projection direction, and at each overlapping position, there is a processing areas P61-P63. In other words, the second passage 62 and the first passage 61, in addition to the configuration methods described in the previous embodiments, can also be arranged in a parallel manner. The processing equipment 63 moves along the second passage 62 between these processing areas P61-P63 to perform the battery pack replacement operation on different EVs. Access to battery packs can be facilitated by the processing equipment 63 accessing the battery pack storage area 66.

In the explanation of the seventh embodiment, as shown in FIG. 7, when the EV 65a moves to the processing area P62 and completes positioning, the processing equipment 63 performs the battery pack replacement operation on it. Simultaneously, while the EV 65a undergoes the battery pack replacement operation, the EV 65b moves to the processing area P63 and undergoes positioning. After completing the battery pack replacement operation for the EV 65a, the processing equipment 63 may immediately move to the processing area P63 and perform the battery pack replacement operation on the EV 65b that has completed positioning. Therefore, while replacing the battery pack, other EVs waiting for battery pack replacement can simultaneously move and position themselves, saving time that would otherwise be spent waiting. When the number of processing areas is increased, more EVs can move simultaneously, and the efficiency of the system may be further improved by expanding the number of processing equipment.

In addition, an extended description of the seventh embodiment, the battery pack replacement system may also include a third passage and a battery pack moving device (not shown in the figure). The battery pack storage area is adjacent to the third passage, which is located on one side of the second passage. The battery pack moving device moves along the third passage between the battery pack storage area and the corresponding positions of the processing equipment. The battery pack moving device accesses the battery packs in the battery pack storage area and/or at positions corresponding to the processing equipment. Consequently, the processing equipment can focus on the battery replacement operation.

Finally, it should be noted that a battery pack replacement system may have a plurality of processing equipments, and the processing equipments are designed for different vehicle specifications or battery pack specifications. Vehicle specifications may include, but are not limited to, dimensions, appearance, wheelbase, track width, ground clearance, and battery pack placement. Battery pack specifications may include, but are not limited to, dimensions, appearance, weight, etc. This design allows the battery pack replacement system to have good scalability and versatility, adapting to various vehicles and battery packs while maintaining efficient scheduling.

In summary, the battery pack replacement system for vehicles provided by the present invention is designed for replacing battery packs in vehicles, such as electric vehicles (EVs), when their batteries are depleted or for other reasons. The system keeps efficient and balanced operation during peak and off-peak times for battery replacements. The unique configuration involves the first passage and the second passage being arranged in a crossed manner in their projections, allowing high-value (high-priced) processing equipment to move along the second passage. This setup enables the processing equipment to perform battery pack replacement operations on vehicles at the overlapping positions of the passages. In other words, the first passage and the second passage are not on the same plane, but their projections have crossing points, allowing vehicles and processing equipments to move flexibly on their respective passages. Additionally, since a single processing equipment can perform battery pack replacement operations on EVs on different first passages, the number of second passages (and consequently, the number of processing equipment) can be less than the number of first passages, resulting in lower unit cost while maintaining high utilization and processing efficiency for the entire battery pack replacement system.

Even though numerous characteristics and advantages of certain inventive embodiments have been set out in the foregoing description, together with details of the structures and functions of the embodiments, the disclosure is illustrative only. Changes may be made in detail, especially in matters of arrangement of parts, within the principles of the present disclosure to the full extent indicated by the broad general meaning of the terms in which the appended claims are expressed.

## Claims

1. A battery pack replacement system (10) for vehicles, comprising:
a plurality of first passages (11a-11d), which provides a plurality of vehicles (15a-15d) to move through on them respectively;
at least one second passage (12a), which intersects with the first passages (11a-11d) in a projection direction, wherein the second passage (12a) has a plurality of overlapping positions with the first passages (11a-11d), and each of the overlapping positions has a processing area (P11-P14); and
at least one processing equipment (13a), which is moving along the corresponding second passage (12a) between the processing areas (P11-P14), and performing a battery pack replacement operation on at least one of the vehicles in the processing areas (P11-P14), which are located in the different first passages (11a-11d), wherein the battery pack replacement operation includes unloading a used battery pack from the vehicle and loading a charged battery pack onto the vehicle by the processing equipment.

2. The battery pack replacement system of claim 1, further comprising:
a battery pack storage area (16), which is adjacent to the second passage (12a) and storing a plurality of battery packs, wherein the processing equipment (13a) moves between the battery pack storage area (16) and each of the processing areas (P11-P14) to transport the used battery pack and the charged battery pack.

3. The battery pack replacement system of claim 1, further comprising:
a battery pack storage area (16), which is adjacent to the second passage (12a), and storing a plurality of battery packs; and
a battery pack moving device (17a), which is moving along the second passage (12a) between the battery pack storage area (16) and the processing equipment (13a),
wherein the battery pack moving device (17a) accesses the battery packs in the battery pack storage area (16) and/or at positions corresponding to the processing equipment (13a).

4. The battery pack replacement system of claim 1, further comprising:
a third passage (24), which is located on one side of the at least one second passage (22a-22b);
a battery pack storage area (26), which is adjacent to the third passage (24), and storing a plurality of battery packs; and
a battery pack moving device (27), which is moving along the third passage (24) between the battery pack storage area (26) and positions corresponding to the processing equipment (23a-23b), wherein the battery pack moving device (27) accesses the battery packs in the battery pack storage area (26) and/or at positions corresponding to the processing equipment (23a-23b).

5. The battery pack replacement system of claim 4, wherein the battery pack moving device (27) accesses the battery packs while both itself and the processing equipment (23a-23b) are in motion.

6. The battery pack replacement system of claim 1, wherein the number of processing equipment (43a-43b) moving along the second passage (42) is more than one.

7. The battery pack replacement system of claim 6, wherein an applicable vehicle specification or an applicable battery pack specification is different for each processing equipment (13a-13b).

8. The battery pack replacement system of claim 1, wherein the battery pack replacement operation further comprises unloading and/or loading a plurality of battery packs for the same vehicle (15a-15d).

9. A battery pack replacement system (40) for vehicles, comprising:
a first passage (41a), which is accommodating at least two vehicles simultaneously within the first passage (41a);
a second passage (42), which has a plurality of overlapping positions with the first passage (41a) in a projection direction, and each of the overlapping positions has a processing area (P41, P44); and
one or more processing equipment (43a, 43b), which being moving along the second passage (42) between the processing areas (P41, P44) and performing a battery pack replacement operation on different vehicles within the respective processing areas (P41, P44), wherein the battery pack replacement operation includes unloading a used battery pack from the vehicle by the processing equipment (43a, 43b) and loading a charged battery pack onto the vehicle by the processing equipment (43a, 43b).

10. The battery pack replacement system of claim 9, comprising:
a third passage (24), which is located on one side of the second passage (42);
a battery pack storage area (46), which is adjacent to the third passage (24) and stores a plurality of battery packs; and
a battery pack moving device (27), which is moving along the third passage (24) between the battery pack storage area (26) and a position corresponding to the processing equipment (43a-43b), wherein the battery pack moving device (27) accesses the battery packs in the battery pack storage area (46) and/or at positions corresponding to the processing equipment (43a-43b).
